# FASCICULE DE BREVET EUROPEEN

(11) **EP 0 679 821 B1**
(45) Date de publication et mention de la délivrance du brevet: **20.05.1998**
(21) Numéro de dépôt: 95400898.3
(22) Date de dépôt: 21.04.1995
(51) Int. Cl.: F16K 11/044, F16K 31/04

(54) **Perfectionnements aux vannes à trois voies à commande électrique**
Elektrisch gesteuertes 3-Wege-Ventil
Electrically actuated 3-way valve

(30) Priorité: 25.04.1994 FR 9404945
(43) Date de publication de la demande: 02.11.1995
(73) Titulaire: CHAFFOTEAUX ET MAURY, 78400 Chatou (FR)
(72) Inventeur: Lemoine, Yves, F-22360 Langueux (FR); Kerkeni, Danielle, F-22940 Saint-Julien (FR)
(74) Mandataire: Burbaud, Eric

(56) Documents cités:
- FR-A- 2 028 756
- GB-A- 1 076 662
- GB-A- 2 199 640
- NL-A- 52 942

## Description

L'invention est relative aux vannes à trois voies à commande électrique, destinées notamment, mais non exclusivement à l'équipement des circuits mixtes de distribution d'eau chaude, pour aiguiller à volonté le courant d'eau chaude qui sort d'un générateur de calories soit vers un circuit de chauffage central, soit vers le circuit primaire d'un échangeur de chaleur permettant de chauffer l'eau d'un circuit de puisage.

Plus particulièrement, l'invention concerne une vanne à trois voies comprenant :
- un corps avec une chambre qui communique en permanence avec une première voie et avec des deuxième et troisième voies à travers respectivement deux sièges annulaires coaxiaux en regard,
- un clapet disposé entre les deux sièges, et solidaire d'une tige qui est montée coulissante dans le corps coaxialement aux deux sièges,
- et un dispositif de commande électrique pour sélectivement appliquer le clapet contre l'un ou l'autre des deux sièges en faisant ainsi communiquer la première voie soit avec la deuxième voie, soit avec la troisième voie.

Un exemple d'une telle vanne à trois voies est divulgué dans le document US-A-4 611 631.

Toutefois, dans ce document, le dispositif de commande électrique du clapet est un noyau magnétique commandé par un solénoïde, qui présente l'inconvénient d'entraîner un déplacement extrêmement rapide du clapet. Ce déplacement rapide peut générer dans les tuyaux de liquide reliés à la vanne des phénomènes transitoires connus sous le nom de "coups de bélier", phénomènes qui d'une part sont bruyants et gênants pour les utilisateurs, et d'autre part sont nuisibles à la longévité du matériel.

Par ailleurs, on connaît également, notamment par le document NL-A-52 942, des vannes à trois voies dont le dispositif de commande comporte un moteur électrique monophasé. Mais avec de tels moteurs, dont le couple est relativement faible pour un poids et un encombrement donnés, le mécanisme de transmission qui transforme le mouvement de rotation du moteur en mouvement de translation du clapet doit être fortement démultiplié pour que le clapet soit appliqué avec une force suffisante sur l'un ou l'autre de ses sièges. Il en résulte que le temps de déplacement du clapet d'un siège à l'autre dans une telle vanne est long, par exemple environ cinq secondes.

La présente invention a notamment pour but de proposer une vanne à trois voies à commande électrique qui puisse rapidement changer d'état et qui évite les phénomènes de "coups de bélier", tout en permettant une application du clapet contre ses sièges avec une force axiale suffisante pour garantir un contact étanche du clapet contre lesdits sièges.

A cet effet, selon l'invention, une vanne à trois voies du genre en question est essentiellement caractérisée en ce que le dispositif de commande comporte un moteur électrique pas à pas pour commander la tige, le dispositif de commande étant conçu pour déplacer le clapet d'un siège à l'autre en une durée comprise entre 0,5 et 2 secondes.

Ainsi, d'une part, le déplacement du clapet d'un siège de clapet à l'autre est suffisamment rapide pour être perçu comme quasi instantané par un utilisateur, et d'autre part ce déplacement est suffisamment lent pour qu'aucun coup de bélier ne soit généré dans les tuyaux reliés à la vanne. De plus, du fait du couple relativement important généré par le moteur pas à pas, le clapet est appliqué contre l'un ou l'autre de ses sièges avec une force axiale suffisante pour garantir une bonne étanchéité du contact entre ce clapet et ses sièges.

Dans des modes de réalisation préférés de l'invention, on a recours en outre à l'une et/ou à l'autre des dispositions suivantes :
- le clapet présente deux surfaces de contact annulaires qui sont prévues pour être appliquées de façon étanche respectivement à tour de rôle sur les deux sièges, chacune des deux surfaces de contact annulaires du clapet étant inclinée par rapport à un plan perpendiculaire à la tige et conformée pour pénétrer partiellement à l'intérieur d'un des deux sièges lorsqu'elle est appliquée contre ce siège ;
- le dispositif de commande est conçu pour déplacer le clapet d'un siège à l'autre en une durée d'environ une seconde ;
- le moteur électrique pas à pas présente un pas qui correspond à un déplacement axial prédéterminé de la tige et exerce sur cette tige une force axiale lorsque le clapet est appliqué contre un de ses sièges, et le clapet comporte une garniture en élastomère qui présente une souplesse suffisante pour que ladite force axiale entraîne un écrasement élastique de ladite garniture contre un des sièges, correspondant à un déplacement axial de la tige qui soit supérieur à trois fois ledit déplacement axial prédéterminé ; ainsi, lorsque le moteur pas à pas est commandé pour produire un couple pendant une durée supérieure au temps de déplacement du clapet d'un siège à l'autre, d'une part, malgré les déplacements axiaux alternatifs du clapet dus au moteur pas à pas en fin de course, on peut être certain que le clapet est appliqué avec étanchéité sur un de ses deux sièges lors de l'arrêt du moteur, et d'autre part, on limite les vibrations qui peuvent être transmises au corps de la vanne par le clapet ; par ailleurs, lorsque le moteur pas à pas est commandé pour tourner d'un nombre de pas prédéterminé, on peut ainsi prévoir une rotation du moteur sur un nombre de pas légèrement supérieur au nombre de pas nécessaire pour déplacer le clapet d'un siège à l'autre, de façon à garantir un bon serrage axial du clapet sur ses sièges ;
- la force axiale exercée sur la tige lorsque le clapet est appliqué contre un de ses sièges, entraîne un écrasement de la garniture qui correspond à un déplacement axial de la tige supérieure à 0,1 mm ;
- le dispositif de commande est fixé au corps de la vanne, un joint de découplage en élastomère étant interposé entre le dispositif de commande et le corps de la vanne en évitant tout contact entre le dispositif de commande et le corps de la vanne par l'intermédiaire de corps rigides ; ainsi, on limite les vibrations qui peuvent être transmises par le carter du moteur pas à pas au corps de la vanne ;
- le dispositif de commande est fixé au corps de la vanne par l'intermédiaire de vis qui présentent des têtes serrées contre l'un ou l'autre du dispositif de commande et du corps de la vanne, et dans laquelle le joint de découplage présente d'une part une plaque, interposée axialement entre le corps et le dispositif de commande et d'autre part des chemises qui s'étendent axialement depuis ladite plaque jusqu'aux têtes des vis en entourant lesdites vis, ces chemises présentant des collets extérieurs disposés sous les têtes des vis ;
- la tige de commande est guidée en coulissement par un joint d'étanchéité annulaire qui est solidaire du corps de la vanne, ladite tige de commande n'étant ainsi en contact avec aucune pièce rigide solidaire du corps de la vanne ; ce qui limite les vibrations qui peuvent être transmises au corps de la vanne par la tige de commande.

L'invention a également pour objet un dispositif comportant une vanne telle que définie ci-dessus, un dispositif générateur de chaleur présentant une entrée et une sortie propre à débiter un liquide chaud, un circuit de chauffage central, et un circuit primaire d'échangeur thermique pour eau sanitaire, les trois voies de la vanne étant connectées respectivement à la sortie du dispositif générateur de chaleur, en amont du circuit de chauffage central et en amont du circuit primaire d'échangeur thermique pour eau sanitaire, le circuit de chauffage central et le circuit primaire d'échangeur thermique pour eau sanitaire étant reliés en aval à l'entrée du générateur de chaleur.

Avantageusement, le dispositif comporte en outre un circuit pour commander le moteur pas à pas, ce circuit étant conçu pour faire produire un couple au moteur pas à pas pendant une durée prédéterminée supérieure à un temps de déplacement du clapet d'un siège à l'autre.

D'autres caractéristiques et avantages de l'invention apparaîtront au cours de la description détaillée suivante d'une de ses formes de réalisation, donnée à titre d'exemple non limitatif, en regard des dessins joints.

Sur les dessins :
- la figure 1 est une vue très schématique d'une installation mixte de distribution d'eau chaude équipée d'une vanne à trois voies selon l'invention,
- la figure 2 est une vue en coupe axiale de ladite vanne, et
- la figure 3 est un graphe représentant le déplacement axial du clapet de la vanne de la figure 2, correspondant à un écrasement de la garniture de ce clapet, en fonction de la force axiale appliquée à ce clapet.

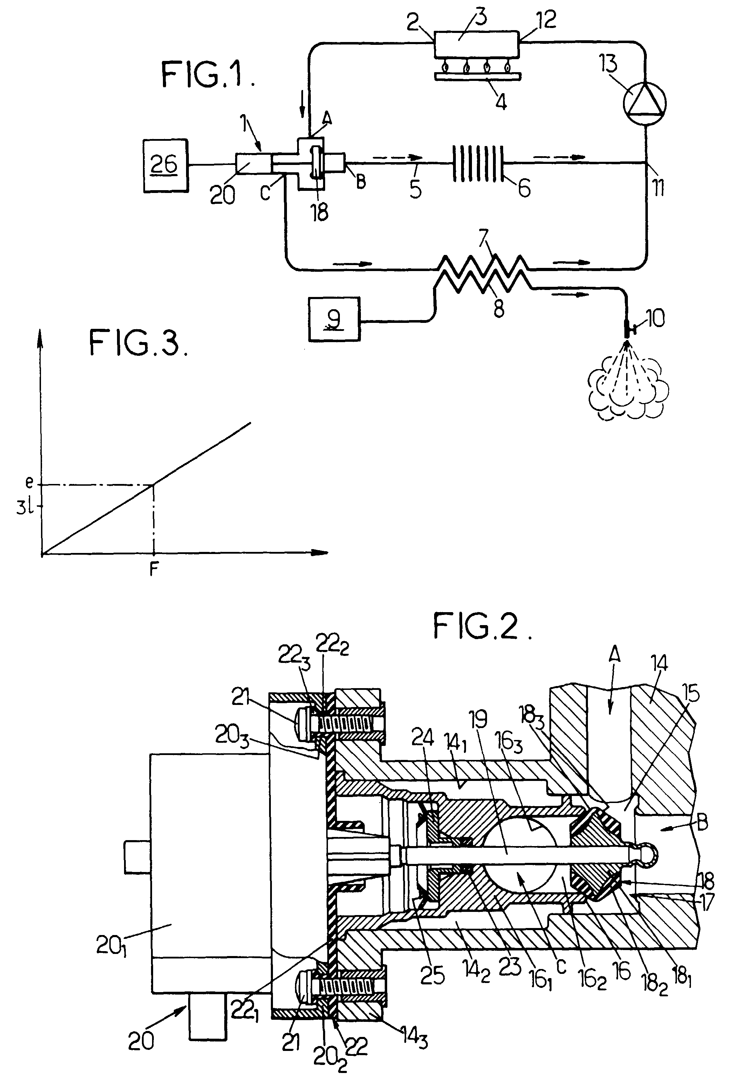

Comme représenté sur la figure 1, la vanne 1 à trois voies considérée ici a l'une de ses voies A reliée à la sortie 2 d'un générateur d'eau chaude 3 dans lequel l'eau est chauffée, par exemple à l'aide d'un brûleur à gaz 4.

Cette vanne permet d'aiguiller l'eau chaude reçue :
- soit, par sa voie B, vers un circuit de chauffage central 5 comprenant des radiateurs 6,
- soit, par sa voie C, vers le circuit primaire 7 d'un échangeur de chaleur dont le secondaire 8 fait partie d'un circuit de puisage d'eau chaude sanitaire s'étendant d'une source d'eau potable sous pression 9 à au moins un robinet 10.

Les extrémités aval des deux circuits 5 et 7 sont reliées en un point 11, lequel est raccordé à une entrée 12 du générateur 3 par l'intermédiaire d'une pompe de circulation 13.

D'une façon connue en soi, la vanne 1 à trois voies comprend (figure 2) :
- un corps 14 définissant une chambre intérieure 15, laquelle communique avec la voie A en permanence et avec les voies B et C à travers respectivement deux sièges 16 et 17 annulaires coaxiaux disposés en regard l'un de l'autre,
- un clapet 18 disposé entre les deux sièges et solidaire d'une tige de commande 19 qui est montée coulissante dans le corps 14 coaxialement aux deux sièges de façon telle que le clapet puisse être appliqué à tour de rôle contre les deux sièges selon deux sens opposés,
- un actionneur linéaire électrique 20 qui est porté par le corps 14 et qui entraîne en coulissement axial la tige de commande 19,
- et un circuit 26 (figure 1) qui commande l'actionneur linéaire 20.

Dans l'exemple représenté sur la figure 2, le siège de clapet 16 fait partie d'une pièce 16₁ rapportée qui est emboîtée avec étanchéité au voisinage de ses deux extrémités axiales dans une chambre 14₁ du corps de vanne, cette chambre 14₁ débouchant axialement à l'extérieur du corps de vanne en face du dispositif de commande 20.

La pièce rapportée 16₁ présente une chambre intérieure 16₂ qui d'une part débouche dans la chambre 15 du corps de vanne axialement au centre du siège de clapet 16, et d'autre part communique avec la troisième voie C par l'intermédiaire d'un orifice latéral 16₃ de la pièce rapportée 16₁, et par l'intermédiaire d'un espace annulaire 14₂ laissé libre entre les deux extrémités axiales de la pièce rapportée 16₁ dans la chambre 14₁.

Par ailleurs, dans l'exemple particulier représenté sur la figure 2, le clapet 18 comporte un noyau interne 18₁ qui peut être réalisé par exemple en matière plastique, et qui est fixé rigidement par encliquetage à l'extrémité libre de la tige de commande 19.

Le noyau 18₁ est recouvert par une garniture 18₂ ayant une forme sensiblement bi-tronconique qui présente deux faces 18₃ annulaires disposées respectivement en regard des deux sièges 16, 17. Ces deux faces annulaires 18₃ sont inclinées de plus de 30°, et de préférence de plus de 45° par rapport à un plan perpendiculaire à l'axe de la tige de commande 19 de façon à pénétrer partiellement à l'intérieur des sièges 16 et 17 à la façon d'un pointeau lorsqu'elles sont appliquées respectivement contre ces sièges.

La forme bi-tronconique de la garniture 18₂ n'est pas limitative : le clapet 18 pourrait par exemple avoir une forme sensiblement sphérique, ou pourrait comporter des faces annulaires 18₃ en forme de zones sphériques, ou pourrait présenter toute forme qui, en liaison avec la forme des sièges 16 et 17, permet une fermeture "douce" ou progressive du clapet. Il est toutefois préférable d'éviter l'utilisation d'un clapet en forme de disque à faces planes venant en contact avec toute la périphérie des sièges 16 ou 17 d'un seul coup, avec lequel la fermeture des voies B ou C risquerait d'être trop brusque.

Dans l'exemple de réalisation considéré, la garniture 18₂ est réalisée en EPDM d'une dureté de 60 sh environ (norme NFT 46011), mais d'autres matériaux et d'autres duretés pourraient être envisagés.

La tige de commande 19 qui est solidaire du clapet 18 traverse axialement la chambre intérieure 16₂ de la pièce rapportée 16₁, et traverse également la paroi de cette chambre 16₂ avant de pénétrer dans le carter du dispositif de commande 20.

Lors de sa traversée de la paroi de la chambre 16₂, la tige de commande 19 est uniquement en contact radial avec un joint d'étanchéité 23 annulaire en élastomère, qui de préférence présente une section à quatre lobes, soit deux lobes radialement intérieurs et deux lobes radialement extérieurs. Ce joint d'étanchéité 23 peut être réalisé à titre d'exemple non limitatif en EPDM d'une dureté d'environ 70 sh (norme NFT 46011), ce joint étant maintenu en place par rapport à la pièce rapportée 16₁ par un presse-étoupe 24 lui-même retenu par un anneau autobloquant 25, ces deux pièces 24 et 25 ne présentant aucun contact radial avec la tige de commande 19.

L'actionneur linéaire 20 comporte un moteur rotatif pas à pas 20₁ qui entraîne en translation axiale la tige de commande 19, par l'intermédiaire d'une liaison vis-écrou (non représentée) ou de tout autre mécanisme de transmission irréversible.

Un exemple non limitatif d'actionneur linéaire qui peut être utilisé dans le cadre de la présente invention est commercialisé sous la référence UBL 13 Z 2 par la société SAIA (SUISSE).

Le carter de l'actionneur linéaire 20 présente une bride 20₂ qui est fixée sur une bride complémentaire 14₃ du corps de vanne, par l'intermédiaire de vis 21.

Un joint de découplage antivibratoire 22 en élastomère est interposé entre les brides 20₂ et 14₃, en évitant tout contact direct entre ces deux brides. A titre d'exemple non limitatif, ce joint peut être réalisé en caoutchouc nitrile d'une dureté de 60 sh environ (norme NFT 46011).

Le joint de découplage 22 comporte une plaque 22₁ interposée axialement entre les brides 20₂ et 14₃, et des parties cylindriques annulaires 22₂ qui s'étendent axialement à l'intérieur d'orifices 20₃ de la bride 20₂. Les vis 21 sont disposées à l'intérieur desdites parties cylindriques annulaires 22₂. En outre, ces parties cylindriques annulaires 22₂ sont prolongées radialement vers l'extérieur par des collets 22₃ qui sont interposés entre les têtes des vis 21 et la bride 20₂. Ainsi, on évite tout contact indirect entre les brides 20₂ et 14₃ par l'intermédiaire des vis 21.

Dans l'exemple représenté sur la figure 2, l'actionneur linéaire 20 est choisi pour exercer sur la tige de commande 19 une force axiale F comprise entre 15 et 35 Newton lorsque le clapet 18 est appliqué contre un de ses sièges, et pour déplacer le clapet 18 d'un siège de clapet à l'autre en une seconde environ.

Ainsi, grâce au couple élevé qui peut être fourni par le moteur pas à pas, notamment en comparaison de son poids et de son encombrement réduits, l'actionneur linéaire 20 permet à la fois d'obtenir une force d'application suffisante du clapet 18 sur l'un ou l'autre de ses sièges de clapet 16 et 17, et une vitesse de changement d'état relativement élevée de la vanne à trois voies. La force d'application du clapet sur son siège, qui est obtenue grâce au couple de moteur pendant le fonctionnement de celui-ci, est ensuite maintenue après l'arrêt du moteur grâce à l'irréversibilité du mécanisme de transmission entre le moteur 20₁ et la tige de commande 19.

Par ailleurs, le changement d'état de la vanne à trois voies n'est pas aussi rapide que dans le cas d'un actionneur à solénoïde et noyau magnétique, ce qui, en combinaison avec la forme du clapet, permet d'éviter que des coups de bélier ne soient générés dans les tuyaux reliés à la vanne à trois voies lors de son changement d'état.

Le fonctionnement d'un moteur pas à pas présente la particularité que les positions de fin de course de la tige de commande 19 correspondent à des valeurs discrètes de déplacement longitudinal le long de son axe, un pas angulaire du moteur pas à pas correspondant à un déplacement axial prédéterminé *l* de la tige 19. A titre d'exemple non limitatif, *l* peut valoir par exemple 33 µm.

Pour être certain que dans ses positions de fin de course, le clapet 18 soit en contact étanche avec l'un ou l'autre des sièges 16 et 17, la garniture 18₂ du clapet est prévue pour que lors de l'application du clapet contre l'un de ses deux sièges avec la force axiale F développée alors par l'actionneur linéaire, la garniture du clapet subisse une déformation élastique correspondant à un déplacement axial e de la tige de commande 19, ce déplacement e étant supérieur par exemple à 3*.1* (voir figure 3). Dans l'exemple considéré, le déplacement e sera donc supérieur à 0,1mm.

Cette disposition est particulièrement utile lorsque le moteur pas à pas est commandé par le circuit 26 non pas en comptant ses pas de rotation, mais de façon à produire un couple pendant une durée prédéterminée supérieure au temps de déplacement du clapet entre ses deux sièges, par exemple pendant 1,5 seconde dans le cas particulier décrit ici (c'est-à-dire pour un temps de déplacement du clapet 18 entre ses deux sièges d'environ une seconde).

En effet, dans ce cas, le moteur pas à pas oscille sur environ deux ou trois pas en fin de course : grâce à l'écrasement élastique axial des garnitures sur au moins 3.*1* lorsque le clapet arrive en fin de course, il subsiste toujours un contact étanche entre le clapet et son siège, même si le clapet recule de 3*.1* par rapport à sa position extrême de fin de course.

Par ailleurs, la garniture 18₂ et les joints 22 et 23 empêchent la transmission des vibrations de l'actionneur linéaire 20, de la tige 19 et du clapet 18 au corps 14 de la vanne, et de là aux tuyauteries reliées à la vanne.

D'autre part, lorsque le moteur pas à pas est commandé par le circuit 26 pour déplacer la tige 19 d'une distance prédéterminée correspondant à un nombre donné de pas, ce nombre de pas peut être choisi pour être légèrement supérieur à la distance axiale séparant les deux sièges de clapet 16 et 17, de façon à obtenir un serrage suffisant du clapet 18 sur l'un ou l'autre de ses deux sièges.

## Revendications

1. Vanne à trois voies comprenant :
- un corps (14) avec une chambre (15) qui communique en permanence avec une première voie (A) et avec des deuxième et troisième voies (B, C) à travers respectivement deux sièges (16, 17) annulaires coaxiaux en regard,
- un clapet (18) disposé entre les deux sièges, et solidaire d'une tige (19) qui est montée coulissante dans le corps coaxialement aux deux sièges,
- et un dispositif de commande (20) électrique pour sélectivement appliquer le clapet (18) contre l'un ou l'autre des deux sièges (16, 17) en faisant ainsi communiquer la première voie (A) soit avec la deuxième voie (B), soit avec la troisième voie (C),
caractérisée en ce que le dispositif de commande (20) comporte un moteur électrique pas à pas (20₁) pour commander la tige (19),
le dispositif de commande étant conçu pour déplacer le clapet d'un siège à l'autre en une durée comprise entre 0,5 et 2 secondes.

2. Vanne selon la revendication 1, dans laquelle le clapet présente deux surfaces de contact annulaires (18₃) qui sont prévues pour être appliquées de façon étanche respectivement à tour de rôle sur les deux sièges (16, 17), chacune des deux surfaces de contact annulaires du clapet étant inclinée par rapport à un plan perpendiculaire à la tige (19) et conformée pour pénétrer partiellement à l'intérieur d'un des deux sièges (16, 17) lorsqu'elle est appliquée contre ce siège.

3. Vanne selon l'une quelconque des revendications 1 et 2, dans laquelle le dispositif de commande est conçu pour déplacer le clapet (18) d'un siège à l'autre en une durée d'environ une seconde.

4. Vanne selon l'une quelconque des revendications précédentes, dans laquelle le moteur électrique pas à pas (20₁) présente un pas qui correspond à un déplacement axial prédéterminé (*l*) de la tige (19) et exerce sur cette tige une force axiale (F) lorsque le clapet (18) est appliqué contre un de ses sièges (16, 17),
et dans laquelle le clapet (18) comporte une garniture en élastomère (18₂) qui présente une souplesse suffisante pour que ladite force axiale (F) entraîne un écrasement élastique de ladite garniture contre un des sièges, correspondant à un déplacement axial (e) de la tige (19) qui soit supérieur à trois fois ledit déplacement axial prédéterminé (*l*).

5. Vanne selon la revendication 4, dans laquelle la force axiale (F) exercée sur la tige (19) lorsque le clapet (18) est appliqué contre un de ses sièges, entraîne un écrasement de la garniture (18₂) qui correspond à un déplacement axial de la tige supérieur à 0,1 mm.

6. Vanne selon l'une quelconque des revendications 4 et 5, dans laquelle le dispositif de commande (20) est fixé sur le corps (14) de la vanne, un joint de découplage (22) en élastomère étant interposé entre le dispositif de commande (20) et le corps (14) de la vanne en évitant tout contact entre le dispositif de commande et le corps de la vanne par l'intermédiaire de corps rigides.

7. Vanne selon la revendication 6, dans laquelle le dispositif de commande (20) est fixé au corps (14) de la vanne par l'intermédiaire de vis (21) qui présentent des têtes serrées contre l'un ou l'autre du dispositif de commande et du corps de la vanne, et dans laquelle le joint de découplage (22) présente d'une part une plaque (22₁), interposée axialement entre le corps (14) et le dispositif de commande (20) et d'autre part des chemises (22₂) qui s'étendent axialement depuis ladite plaque (22₁) jusqu'aux têtes des vis en entourant lesdites vis, ces chemises présentant des collets (22₃) extérieurs disposés sous les têtes des vis.

8. Vanne selon l'une quelconque des revendications 4 à 7, dans laquelle la tige de commande (19) est guidée en coulissement par un joint d'étanchéité annulaire (23) qui est solidaire du corps (14) de la vanne, ladite tige de commande (19) n'étant ainsi en contact avec aucune pièce rigide solidaire du corps (14) de la vanne.

9. Dispositif comportant une vanne selon l'une quelconque des revendications précédentes, un dispositif générateur de chaleur (3) présentant une entrée (12) et une sortie (2) propre à débiter un liquide chaud, un circuit de chauffage central (5), et un circuit primaire (7) d'échangeur thermique pour eau sanitaire, les trois voies (A, B, C) de la vanne étant connectées respectivement à la sortie (2) du dispositif générateur de chaleur, en amont du circuit de chauffage central (5) et en amont du circuit primaire (7) d'échangeur thermique pour eau sanitaire, le circuit de chauffage central (5) et le circuit primaire (7) d'échangeur thermique pour eau sanitaire étant reliés en aval à l'entrée (12) du générateur de chaleur.

10. Dispositif selon la revendication 9, comportant en outre un circuit (26) pour commander le moteur pas à pas (20₁), ce circuit étant conçu pour faire produire un couple au moteur pas à pas pendant une durée prédéterminée supérieure à un temps de déplacement du clapet d'un siège à l'autre.

## Patentansprüche

1. Dreiwegeventil mit:
- einem Korpus (14) mit einer Kammer (15), die laufend mit einem ersten Strömungsweg (A) und einem zweiten und dritten Strömungsweg (B, C) über jeweils zwei ringförmige koaxiale und sich gegenüber stehende Ventilsitze (16, 17) in Verbindung steht,
- einem Schieber (18), welcher zwischen den beiden Ventilsitzen angeordnet und fest mit einer Schieberspindel (19) in Verbindung steht, die verschieblich in dem Korpus koaxial zu den beiden Ventilsitzen angeordnet ist,
- und einer elektrischen Betätigungseinrichtung (20) zum wahlweisen Anlegen des Schiebers (18) gegen den einen oder den anderen der beiden Ventilsitze (16, 17) unter Herstellung der Verbindung mit dem ersten Strömungsweg (A) und dem zweiten Strömungsweg (B) oder dem dritten Strömungsweg (C),
**dadurch gekennzeichnet,** daß die Betätigungseinrichtung (20) einen elektrischen Schrittmotor (20₁) zur Ansteuerung der Schieberspindel (19) aufweist,
wobei die Betätigungseinrichtung so ausgelegt ist, daß sie den Schieber von einem Ventilsitz zum anderen innerhalb eines Zeitraums zwischen 0,5 und 2 Sekunden verlagert.

2. Ventil nach Anspruch 1, bei welchem der Schieber zwei ringförmige Kontaktflächen (18₃) aufweist, die zur abwechselnden dichten Anlage gegen jeweils einen der beiden Ventilsitze (16, 17) vorgesehen sind, wobei jede der beiden ringförmigen Kontaktflächen des Schiebers gegenüber einer zur Schieberspindel senkrecht stehenden Ebene geneigt und zum teilweisen Eindringen in das Innere eines der beiden Ventilsitze (16, 17) ausgelegt ist, wenn sie sich in Anlage gegen den jeweiligen Ventilsitz befindet.

3. Ventil nach einem der Ansprüche 1 und 2, bei welchem die Betätigungseinrichtung so ausgelegt ist, daß sie den Ventilschieber (18) von einem Ventilsitz zum anderen in einem Zeitraum von etwa einer Sekunde verlagert.

4. Ventil nach einem der vorhergehenden Ansprüche, bei welchem der elektrische Schrittmotor (20₁) eine Schrittgröße aufweist, die einer vorgegebenen axialen Verlagerung (*l*) der Schieberspindel (19) entspricht und auf diese Schieberspindel eine axiale Kraft (F) ausübt, wenn der Ventilschieber (18) sich in Anlage gegen einen der Ventilsitze (16, 17) befindet,
und bei welcher der Ventilschieber (18) eine Elastomerdichtung (18₂) aufweist, die eine ausreichende Elastizität besitzt, damit die axiale Kraft (F) eine elastische Aufweitung der Dichtung gegen einen der Ventilsitze herbeiführt, welche einer axialen Verlagerung der Schieberspindel (19) entspricht, die größer als das Dreifache der vorgegebenen axialen Verlagerung (*l*) ist.

5. Ventil nach Anspruch 4, bei welchem die bei Anlage des Ventilschiebers (18) gegen einen der zugehörigen Ventilsitze auf die Schieberspindel (19) ausgeübte Kraft (F) eine Aufweitung der Dichtung (18₂) veranlaßt, welche einer axialen Verlagerung der Schieberspindel um mehr als 0,1 mm entspricht.

6. Ventil nach einem der Ansprüche 4 und 5, bei welchem die Betätigungseinrichtung (20) auf dem Korpus (14) des Ventils befestigt ist, wobei zwischen der Betätigungseinrichtung (20) und dem Korpus (14) des Ventils eine Entkopplungsdichtung (22) aus Elastomermaterial unter Vermeidung jeglichen Kontakts zwischen der Betätigungseinrichtung und dem Korpus des Ventils mittels starrer Körper eingesetzt ist.

7. Ventil nach Anspruch 6, bei welchem die Betätigungseinrichtung (20) am Korpus (14) des Ventils mittels Schrauben (21) befestigt ist, deren Köpfe gegen die Betätigungseinrichtung oder gegen den Ventilkorpus gespannt sind, und bei welcher die Entkopplungsdichtung (22) einerseits eine axial zwischen den Korpus (14) und die Betätigungseinrichtung (20) eingesetzte Platte (22₁) und andererseits Mantelteile (22₂) aufweist, die sich axial von der Platte (22₁) bis zu den Schraubenköpfen unter Umschließung derselben erstrecken und außenliegende Ränder (22₃) besitzen, die unter den Schraubenköpfen angeordnet sind.

8. Ventil nach einem der vorhergehenden Ansprüche, bei welchem die Schieberspindel (19) gleitend von einer Ringdichtung (23) geführt wird, die fest mit dem Korpus (14) des Ventils verbunden ist, wobei sich die Schieberspindel (19) somit nicht in Kontakt mit einem der fest mit dem Korpus (14) des Ventils verbundenen starren Teile befindet.

9. Vorrichtung mit einem Ventil nach einem der vorhergehenden Ansprüche, mit einem Wärmegenerator (3), der einen Einlaß (12) und einen zur Abgabe einer heißen Flüssigkeit geeigneten Auslaß (2) aufweist, mit einem zentralen Heizkreislauf (5) und einem Primärkreislauf (7) eines Brauchwasser-Wärmetauschers, wobei die drei Strömungswege (A, B, C) des Ventils jeweils mit dem Auslaß (2) des Wärmegenerators auf der Anströmseite des zentralen Heizkreislaufs (5) und auf der Anströmseite des Primärkreislaufs (7) für den Brauchwasser-Wärmetauscher angeschlossen sind und wobei der zentrale Heizkreislauf (5) und der Primärkreislauf (7) des Brauchwasser-Wärmetauschers abströmseitig vom Einlaß (12) des Wärmegenerators angeschlossen sind.

10. Vorrichtung nach Anspruch 9, welche außerdem eine Schaltung (26) zum Ansteuern des Schrittmotors (20₁) aufweist, wobei diese Schaltung so ausgelegt ist, daß sie die Erzeugung eines Schrittmotormoments während eines vorgegebenen Zeitraums veranlaßt, der länger ist als eine Zeit zur Verlagerung des Ventilschiebers von einem Ventilsitz zum anderen.

## Claims

1. Three-way valve comprising:
- a body (14) with a chamber (15) which is in permanent communication with a first way (A) and with second and third ways (B, C) respectively through two annular coaxial opposed seats (16, 17),
- a valve-member (18) arranged between the two seats, and firmly attached to a rod (19) which is mounted to slide in the body coaxially with the two seats,
- and an electrical operating device (20) to selectively apply the valve-member (18) against one or the other of the two seats (16, 17) thus causing the first way (A) to communicate either with the second way (B) or with the third way (C),
characterised by the fact that the operating device (20) includes an electric stepper motor (20₁) to operate the rod (19),
the operating device being designed to move the valve from one seat to the other within a period of between 0.5 and 2 seconds.

2. Valve as described in claim 1, in which the valve has two annular contact surfaces (18₃) which are intended to be applied tightly in turn respectively to the two seats (16, 17), each of the two annular contact surfaces of the valve being inclined relative to a plane perpendicular to the rod (19) and shaped to partially penetrate inside one of the two seats (16, 17) when it is applied against this seat.

3. Valve as described in either of claims 1 or 2, in which the operating device is designed to move the valve-member (18) from one seat to the other within a period of approximately one second.

4. Valve as described in any one of the preceding claims, in which the electric stepper motor (20₁) has a step which corresponds to a predetermined axial displacement (1) of the rod (19) and applies an axial force (F) to this rod when the valve-member (18) is applied against one of its seats (16, 17),
and in which the valve-member (18) includes an elastomer facing (18₂) which has sufficient flexibility for the said axial force (F) to cause elastic squashing of the said facing against one of the seats, corresponding to an axial displacement (e) of the rod (19) greater than three times the said predetermined axial displacement (*l*).

5. Valve as described in claim 4, in which the axial force (F) applied to the rod (19) when the valve-member (18) is applied against one of its seats, causes squashing of the facing (18₂) which corresponds to an axial displacement of the rod greater than 0.1 mm.

6. Valve as described in either of claims 4 or 5, in which the operating device (20) is fixed to the body, (14) of the valve, an elastomer isolation joint being interposed between the operating device (20) and the body (14) of the valve avoiding any contact between the operating device and the body of the valve via rigid bodies.

7. Valve as described in claim 6, in which the operating device (20) is fixed to the body (14) of the valve by means of screws (21) which have heads clamped against one or the other of the operating device and the body of the valve, and in which the isolation joint (22) has on the one hand a plate (22₁), axially interposed between the body (14) and the operating device (20) and on the other hand skirts (22₂) which extend axially from the said plate (22₁) to the heads of the screws and surrounding the said screws, these skirts having external flanges (22₃) arranged under the heads of the screws.

8. Valve as described in any one of claims 4 to 7, in which the operating rod (19) is guided as it slides by an O-ring seal (23) which is firmly attached to the body (14) of the valve, the said operating rod (19) thus not being in contact with an rigid piece firmly attached to the body (14) of the valve.

9. Device including a valve as described in any one of the preceding claims, a heat generating device (3) having an inlet (12) and an outlet (2) suitable to deliver a hot liquid, a central heating circuit (5), and a primary heat-exchange circuit (7) for sanitation water, the three ways (A, B, C) of the valve being connected respectively to the outlet (2) of the heat generating device, upstream of the central heating circuit (5) and upstream of the primary heat exchanger circuit (7) for sanitation water, the central heating circuit (5) and the primary heat exchanger circuit (7) for sanitation water being connected downstream to the inlet (12) of the heat generator.

10. Device as described in claim 9, also including a circuit (26) for control of the stepper motor (20₁), this circuit being designed to cause production of a torque at the stepper motor during a predetermined period greater than a displacement time of the valve from one seat to the other.
